(19) Europäisches Patentamt
European Patent Office
Office européen des brevets

(11) EP 2 441 807 A1

(12) **EUROPEAN PATENT APPLICATION**
published in accordance with Art. 153(4) EPC

(43) Date of publication:
**18.04.2012 Bulletin 2012/16**

(21) Application number: **10786049.6**

(22) Date of filing: **24.05.2010**

(51) Int Cl.:
***C09D 11/00*** $^{(2006.01)}$ ***B41J 2/01*** $^{(2006.01)}$
***B41M 5/00*** $^{(2006.01)}$

(86) International application number:
**PCT/JP2010/058712**

(87) International publication number:
**WO 2010/143518 (16.12.2010 Gazette 2010/50)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **12.06.2009 JP 2009141008**

(71) Applicant: **DIC Corporation**
**Tokyo 174-8520 (JP)**

(72) Inventors:
- **NAGAHAMA Sadamu**
**Takaishi-shi**
**Osaka 592-0001 (JP)**
- **KURIYAMA Chisato**
**Takaishi-shi**
**Osaka 592-0001 (JP)**

(74) Representative: **Beckmann, Claus**
**Kraus & Weisert**
**Patent- und Rechtsanwälte**
**Thomas-Wimmer-Ring 15**
**80539 München (DE)**

(54) **BINDER FOR JET PRINTING INKS, JET PRINTING INKS CONTAINING SAME, AND PRINTED MATTER**

(57) The present invention relates to a binder for an inkjet printing ink, the binder including a polysiloxane (A), a hydrophilic-group-containing polyurethane (B), and an aqueous medium (C), wherein the polysiloxane (A) and the hydrophilic group-containing polyurethane (B) form composite resin particles and the polysiloxane (A) is dispersed in the aqueous medium (C) with the hydrophilic-group-containing polyurethane (B); an ink for inkjet printing; and a printed produce.

EP 2 441 807 A1

## Description

### Technical Field

The present invention relates to a binder for an ink usable for inkjet printing and an inkjet printing ink containing the binder.

### Background Art

In recent years, in the rapidly growing industry relating to inkjet printing, inkjet printers having higher performances, improved ink, and the like have been markedly achieved. Thus, images having a high glossiness and a high definition equivalent to those of silver-halide photographs have come to be readily obtained even in ordinary households.
In particular, improvements in inks for the purpose of achieving higher image quality and reduction of environmental load have been rapidly performed such as a shift from conventional dye inks to pigment inks and a shift from solvent-based inks to water-based inks. At present, inks based on water-based pigment inks have been actively developed.
With developments of inkjet printers having higher performances and the like, such inks have been required to have higher performances year after year. For example, in addition to high color developability, high glossiness, and the like, which have been conventionally demanded, an abrasion resistance that can sufficiently suppress discoloration, deterioration, and the like of printed images due to loss of pigments caused by, for example, friction that may be generated by the application of an external force to the surfaces of the printed images has been increasingly demanded in recent years.
As an ink having such a high abrasion resistance, for example, an ink for inkjet recording is known that contains a pigment, an aqueous resin, and an aqueous medium wherein the aqueous resin is a polyurethane resin obtained by allowing an organic diisocyanate to react with a diol having a polyoxyethylene moiety and the polyurethane resin has a carboxyl group, a specific acid value, a specific number-average molecular weight, and a specific amount of the polyoxyethylene moiety (for examples, refer to Patent Literature 1).
Images obtained by printing with the ink for inkjet recording have a certain level of abrasion resistance that, for example, can suppress loss of pigments caused by rubbing between paper sheets or the like.
However, with widening of fields in which inkjet printing products are used, a higher level of abrasion resistance has come to be demanded. Under such circumstances, there are cases where printed images formed with the ink for inkjet recording still suffer from discoloration, deterioration, and damage due to loss of pigments or the like in the case of, for example, being locally subjected to a strong external force.

### Citation List

#### Patent Literature

PTL 1: Japanese Unexamined Patent Application Publication No. 2000-1639

### Summary of Invention

#### Technical Problem

An object of the present invention is to provide a binder for an inkjet printing ink that can form a high-definition printed image having a very high level of abrasion resistance and that has high storage stability; and an inkjet printing ink containing such a binder.

#### Solution to Problem

The inventors of the present invention studied how to achieve the object and thought that the abrasion resistance can be effectively enhanced by making a crosslinking structure in a printed surface be strong and increasing the strength of the printed surface; and the inventors studied a combined use of a hydrophilic-group-containing polyurethane with a polysiloxane having a crosslinking structure formed by a hydrolysis condensation reaction.
Specifically, they studied a binder for an inkjet printing ink, the binder being obtained by independently mixing a known hydrophilic-group-containing polyurethane and a known polysiloxane with an aqueous medium.

However, the polysiloxane itself generally does not have high water dispersibility and hence the binder for an inkjet printing ink tends to coagulate and causes, for example, clogging of ink discharge nozzles of an inkjet printer. As a result, there are cases where printed images cannot be formed.
Thus, they studied enhancement of the water dispersibility of the polysiloxane and studied a binder for an inkjet printing ink, the binder being obtained by dispersing the polyurethane and the polysiloxane in an aqueous medium with an emulsifying agent.
An ink containing the binder can form printed images having a certain level of definition. However, discoloration of printed images due to, for example, bleeding of the emulsifying agent to the surfaces of the printed images occurs and the printed images do not have sufficient abrasion resistance.
They also studied a binder for an inkjet printing ink in which, as the polysiloxane, for example, a resin having a hydrophilic group and a polysiloxane structure is combined with the hydrophilic-group-containing polyurethane.
However, an ink containing the binder is less likely to be discharged from ink discharge nozzles provided in standard inkjet printers and hence it is difficult to use the ink as an inkjet printing ink.
Thus, the inventors of the present invention studied a technique of stably dispersing a polysiloxane in an aqueous medium with a hydrophilic-group-containing polyurethane. The inventors have found that an ink containing a binder in which the polysiloxane (A) is dispersed in an aqueous medium (C) with a hydrophilic-group-containing polyurethane (B) is less likely to cause clogging of ink discharge nozzles, has high storage stability, and can form high-definition printed images having high abrasion resistance. Thus, the inventors have achieved the object.
Specifically, the present invention relates to a binder for an inkjet printing ink, the binder including a polysiloxane (A), a hydrophilic-group-containing polyurethane (B), and an aqueous medium (C), wherein the polysiloxane (A) and the hydrophilic-group-containing polyurethane (B) form composite resin particles and the polysiloxane (A) is dispersed in the aqueous medium (C) with the hydrophilic-group-containing polyurethane (B).
In addition, the present invention relates to an ink for inkjet printing, the ink including the binder for an inkjet printing ink and a pigment; and a printed product printed with the ink for inkjet printing.

Advantageous Effects of Invention

An inkjet printing ink containing a binder for an inkjet printing ink according to the present invention has high storage stability and can form high-definition sharp printed images that are persistent without being suffered from loss of pigments and the like even under a strong external force and that have abrasion resistance equivalent to that of silver-halide photographs. Accordingly, the ink can be suitably used for, for example, photographic printing by inkjet printing and high-speed printing by inkjet printing.

Description of Embodiments

A binder for an inkjet printing ink according to the present invention includes a polysiloxane (A), a hydrophilic-group-containing polyurethane (B), an aqueous medium (C), and optionally another additive, wherein the polysiloxane (A) and the hydrophilic-group-containing polyurethane (B) form composite resin particles and the polysiloxane (A) is dispersed in the aqueous medium (C) with the hydrophilic-group-containing polyurethane (B).
Herein, the polysiloxane (A) and the hydrophilic-group-containing polyurethane (B) are not independently dispersed in the aqueous medium (C). The polysiloxane (A) and the hydrophilic-group-containing polyurethane (B) form composite resin particles containing the polysiloxane (A) within resin particles formed of the hydrophilic-group-containing polyurethane (B) and the composite resin particles are dispersed in the aqueous medium (C). Specifically, the composite resin particles preferably have a configuration in which the polysiloxane (A) is dispersed in the form of a single or plural particles within a particle of the hydrophilic-group-containing polyurethane resin (B); the composite resin particles preferably have a so-called core-shell configuration in which the polysiloxane (A) forms a core layer and the hydrophilic-group-containing polyurethane resin (B) forms a shell layer. In the composite resin particles, it is preferred that the polysiloxane (A) be substantially completely covered with the hydrophilic-group-containing polyurethane (B); however, this feature is not essential and a portion of the polysiloxane (A) may be present in outermost regions of the composite resin particles as long as, for example, high storage stability of a binder for an inkjet printing ink according to the present invention and discharge stability of the ink are not degraded.
In contrast, in a binder for an inkjet printing ink in which the polysiloxane (A) and the polyurethane (B) do not form composite resin particles and are independently dispersed in the aqueous medium (C), there are cases where, for example, clogging of ink discharge nozzles or degradation of abrasion resistance due to bleeding of an emulsifying agent occurs.
The polysiloxane (A) and the hydrophilic-group-containing polyurethane (B) are preferably not chemically bonded to each other in view of further enhancing the storage stability of a binder for an inkjet printing ink according to the present invention and maintaining high ink dischargeability and high abrasion resistance.

Composite resin particles formed of the polysiloxane (A) and the hydrophilic-group-containing polyurethane (B) preferably have an average particle diameter of 10 to 350 nm in view of maintaining high storage stability of a binder for an inkjet printing ink and high ink dischargeability.

The mass ratio [(A)/(B)] of the polysiloxane (A) to the hydrophilic-group-containing polyurethane (B) is preferably in the range of 1/99 to 50/50, more preferably in the range of 1/99 to 30/70, and particularly preferably in the range of 5/95 to 15/85, for the purpose of obtaining a binder for an inkjet printing ink allowing for high ink dischargeability and formation of high-definition printed products having high abrasion resistance.

A binder for an inkjet printing ink according to the present invention preferably contains the polysiloxane (A) and the hydrophilic-group-containing polyurethane (B) in a total percentage of 10 to 50 mass% with respect to the entire amount of the binder for an inkjet printing ink for the purpose of achieving high ink dischargeability and high abrasion resistance of printed products, more preferably 15 to 40 mass%.

The polysiloxane (A) used in the present invention will be first described.

The polysiloxane (A) has a chain structure constituted by silicon atoms and oxygen atoms and optionally has a hydrolyzable silyl group, a silanol group, or the like.

The hydrolyzable silyl group denotes an atomic group in which a functional group having a capability of forming a hydroxy group under the influence of water is bonded to a silicon atom: for example, a halogen atom, an alkoxy group, a substituted alkoxy group, an acyloxy group, a phenoxy group, a mercapto group, an amino group, an amide group, an aminoxy group, an iminoxy group, and an alkenyloxy group that are bonded to silicon atoms. In particular, the hydrolyzable silyl group is preferably an alkoxy group bonded to a silicon atom or a substituted alkoxy group bonded to a silicon atom, more preferably an alkoxy group that has 1 to 3 carbon atoms and is bonded to a silicon atom.

The silanol group denotes an atomic group in which a hydroxy group is directly bonded to the silicon atom. The silanol group is formed as a result of hydrolysis of the hydrolyzable silyl group.

The polysiloxane (A) may be a polysiloxane optionally having, in addition to the above-described groups, an alkyl group such as a methyl group, a phenyl group, or the like. For example, the polysiloxane (A) is preferably a polysiloxane in which an aromatic cyclic moiety such as a phenyl group or an alkyl group having 1 to 3 carbon atoms is directly bonded to a silicon atom constituting the polysiloxane for the purpose of forming stable composite resin particles.

The polysiloxane (A) may be, for example, a polysiloxane obtained by subjecting a silane compound described below to hydrolysis condensation completely or partially.

Examples of the silane compound include organotrialkoxysilanes such as methyltrimethoxysilane, methyltriethoxysilane, methyltri-n-butoxysilane, ethyltrimethoxysilane, n-propyltrimethoxysilane, iso-butyltrimethoxysilane, cyclohexyltrimethoxysilane, phenyltrimethoxysilane, phenyltriethoxysilane, vinyltrimetnoxysilane, and 3-(meth)acryloyloxypropyltrimethoxysilane; diorganodialkoxysilanes such as dimethyldimethoxysilane, dimethyldiethoxysilane, dimethyldi-n-butoxysilane, diethyldimethoxysilane, diphenyldimethoxysilane, methylcyclohexyldimethoxysilane, and methylphenyldimethoxysilane; various chlorosilanes such as methyitrichlorosilane, ethyltrichlorosilane, phenyltrichlorosilane, vinyltrichlorosilane, 3-(meth)acryloyloxypropyltrichlorosilane, dimethyldichlorosilane, diethyldichlorosilane, and diphenyldichlovosilane; and partial hydrolytic condensates of the foregoing. In particular, an organotrialkoxysilane or a diorganodialkoxysilane is preferably used. The silane compounds may be used alone or in combination of two or more thereof.

The polysiloxane (A) is preferably a polysiloxane in which a polysiloxane (A-1.) having one or more structures selected from the group consisting of general formulae (I) and (II) below is bonded through silicon atoms and oxygen atoms to a condensate (A-2) of an alkyltrialkoxysilane in which the alkyl group has to 3 carbon atoms for the purpose of obtaining printed products having high abrasion resistance.

[Chem. 1]

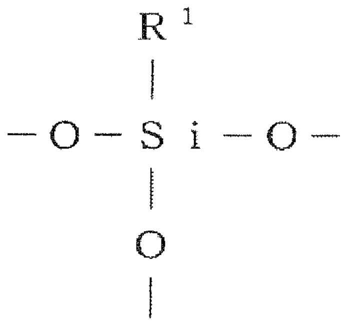

(I)

[Chem. 2]

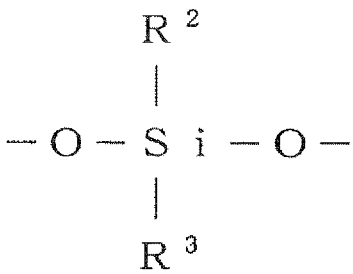

(II)

[In the general formulae (I) and (II), $R^1$ represents an organic group that is bonded to the silicon atom and has 4 to 12 carbon atoms; and $R^2$ and $R^3$ each independently represent a methyl group bonded to the silicon atom or an ethyl group bonded to the silicon atom.]

The polysiloxane (A-1) having structures represented by the general formulae (I) and (II) may be a polysiloxane obtained by subjecting an organoalkoxysilane, preferably a monoorganorrialkoxysilane that has an organic group having 4 to 12 carbon atoms and bonded to the silicon atom or a diorganodialkoxysilane that has two methyl groups or two ethyl groups bonded to the silicon atom, to hydrolysis condensation; and the polysiloxane may have a linear, branched, or cyclic structure.

Examples of the organic group having 4 to 12 carbon atoms include alkyl groups, cycloalkyl groups, aryl groups, and aralkyl groups that have 4 to 12 carbon atoms. Preferred examples include alkyl groups such as a n-butyl group, an iso-butyl group, a n-hexyl group, a n-octyl group, a n-dodecyl group, and a cyclohexylmethyl group; cycloalkyl groups such as a cyclohexyl group and a 4-methylcyclohexyl group; aryl groups such as a phenyl group and a 4-methylphenyl group; and aralkyl groups such as a benzyl group. In particular, a phenyl group and alkyl groups having 4 carbon atoms are more preferred.

The condensate (A-2) of an alkyltrialkoxysilane in which the alkyl group has 1 to 3 carbon atoms may be, for example, a condensate having hydroxy groups bonded to silicon atoms and alkoxy groups bonded to silicon atoms.

Specifically, the condensate (A-2) of an alkyltrialkoxysilane is preferably a condensate having a structure represented by the following general formula (IV) for the purpose of obtaining printed products having high abrasion resistance.

[Chem. 3]

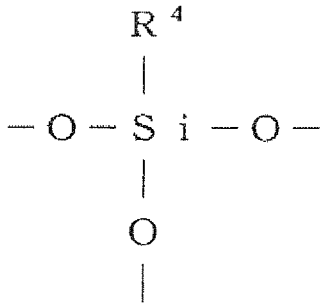

(IV)

[In the general formula (IV), $R^4$ represents an alkyl group having 1 to 3 carbon atoms.]

The polysiloxane (A) is preferably formed through two-step reactions. Specifically, a silane compound having a relatively low molecular weight such as an organoalkoxysilane described above is allowed to react to obtain a substance that is the polysiloxane (A-1); the pclys-loxane (A-1) is subsequently allowed to react with the condensate (A-2) of an alkyltrialkoxysilane such as a condensate of methyltrimethoxysilane or ethyltrimethoxysilane to form the polysiloxane (A). As a result, printed products having higher abrasion resistance can be formed.

In view of stably dispersing the polysiloxane (A) with the hydrophilic-group-containing polyurethane (B) in the aqueous medium (C), the polysiloxane (A) preferably has a weight-average molecular weight in the range of 10,000 to 1,000,000.

Since the polysiloxane (A) is stably dispersed with the hydrophilic-group-containing polyurethane (B) in the aqueous medium (C), the polysiloxane (A) preferably has such a hydrophobicity that the polysiloxane (A) alone cannot be stably dispersed in the aqueous medium (C). Specifically, the amount of a hydrophilic group in the polysiloxane (A) is, when the hydrophilic group is, for example, an anionic group or a cationic group, preferably less than 50 mmol/kg, more preferably 25 mmol/kg or less, particularly preferably 0 mmol/kg.

Next, the hydrophilic-group-containing polyurethane (B) will be described.

The hydrophilic-group-containing polyurethane (B) is an essential component that imparts water dispersibility to the polysiloxane (A) and provides a binder for an inkjet printing ink according to the present invention, the binder being usable for an ink that can form printed images having very high abrasion resistance.

Examples of the hydrophilic-group-containing polyurethane (8) include various polyurethanes. The hydrophilic-group-containing polyurethane (B) preferably has a weight-average molecular weight of 3,000 to 150,000, more preferably a weight-average molecular weight of 15,000 to 50,000 because an inkjet printing ink that has high storage stability and ink dischargeability and can form printed images having high abrasion resistance can be obtained.

The hydrophilic-group-containing polyurethane (B), which imparts water dispersibility to the polysiloxane (A), indispensably has a hydrophilic group. The hydrophilic group may be an anionic group, a cationic group, or a nonionic group. Of these, an anionic group is preferably used.

Examples of the anionic group include a carboxyl group, a carboxylate group, a sulfonic group, and a sulfonate group. In particular, carboxylate groups or sulfonate groups that are partially or entirely neutralized with a basic compound or the like are preferably used for the purpose of maintaining high water dispersibility.

Examples of the basic compound usable for neutralizing a carboxyl group or a sulfonic group serving as the anionic group include ammonia; organic amines such as triethylamine, pyridine, and morpholine; alkanolamines such as monoethanol amine; and metal basic compounds containing Na, K, Li, Ca, and the like. In particular, the neutralization is preferably performed with potassium hydroxide or an aqueous solution of potassium hydroxide for the purpose of providing environmentally friendly products.

Examples of the cationic group include tertiary amino groups.
Examples of an acid usable for neutralizing a part of or the entirety of the tertiary amino groups include formic acid and acetic acid. Examples of a quaternary agent for making a part of or the entirety of the tertiary amino groups be quaternary groups include dialkyl sulfates such as dimethyl sulfate and diethyl sulfate.

Examples of the nonionic group include polyoxyalkylene groups such as a polyoxyethylene group, a polyoxypropylene group, a polyoxyburylene group, a poly(oxyethylene-oxypropylene) group, and a polyoxyethylene-polyoxypropylene group. In particular, a polyoxyalkylene group having an oxyethylene unit is preferably used for the purpose of further enhancing hydrophilicity.

The hydrophilic group with respect to the entirety of the hydrophilic-group-containing polyurethane (B) is preferably present in the range of 50 to 1500 mmol/kg for the purpose of imparting higher water dispersibility and maintaining

high ink discharge stability, more preferably in the range of 200 to 600 mmol/kg.

The hydrophilic-group-containing polyurethane (B) may be, for example, a polyurethane obtained by allowing a polyol (b1) to react with a polyisocyanate (b2). A hydrophilic group of the hydrophilic-group-containing polyurethane (B) can be incorporated into the hydrophilic-group-containing polyurethane (B) by, for example, using a hydrophilic-group-containing polyol as a component constituting the polyol (b1)

As the polyol (b1) usable for producing the hydrophilic-group-containing polyurethane (B), for example, the hydrophilic-group-containing polyol and another polyol may be used in combination.

Examples of the hydrophilic-group-containing polyol include carboxyl-group-containing polyols such as 2,2'-dimethyolpropionic acid, 2,2'-dimethylolbutanoic acid, 2,2'-dimethylolbutyric acid, and 2,2'-dimethylolvaleric acid; and sulfonic-group-containing polyols such as 5-sulfoisophthalic acid, sulfoterephthalic acid, 4-sulfophthalic acid, and 5[4-sulfophenoxylisophthalic acid. The hydrophilic-group-containing polyol may be, for example, a hydrophilic-group-containing polyester polyol obtained by allowing the above-described low-molecular-weight hydrophilic-group-containing polyol to react with a polycarboxylic acid such as adipic acid.

The hydrophilic-group-containing polyol is preferably used in the range of 5 to 50 mass% with respect to the entire amount of the polyol (b1) in view of imparting high water dispersion stability to the hydrophilic-group-containing polyurethane (a1), more preferably in the range of 5 to 20 mass% in view of achieving the water dispersion stability and high abrasion resistance, particularly preferably in the range of 5 to 10 mass%.

Another polyol that can be used in combination with the hydrophilic-group-containing polyol may be appropriately used in accordance with, for example, desired characteristics for a binder for an inkjet printing ink according to the present invention. For example, a polyether polyol, a polycarbonate polyol, or a polyester polyol may be used.

In particular, the polyether polyol and the polycarbonate polyol can impart high ink storage stability and high ink dischargeability to a binder for an inkjet printing ink according to the present invention and hence are preferably used in combination with the hydrophilic-group-containing polyol.

The polyether polyol may be, for example, a polyether polyol obtained by subjecting an alkylene oxide to addition polymerization with, as an initiator, one or more compounds having two or more active hydrogen atoms.

Examples of the initiator include ethylene glycol, diethylene glycol, triethylene glycol, propylene glycol, trimethylene glycol, 1,3-butanediol, 1,4-butanediol, 1,6-hexanediol, neopentyl glycol, glycerin, trimethylolethane, and trimethylolpropane.

Examples of the alkylene oxide include ethylene oxide, propylene oxide, butylene oxide, styrene oxide, epichlorohydrin, and tetrahydrofuran.

As for the polyether polyol, polyoxytetramethylene glycol is preferably used in view of obtaining a binder for an inkjet printing ink that can impart very high abrasion resistance.

The polyoxytetramethylene glycol, is obtained by, for example, ring-opening polymerization of tetrahydrofuran. In the present invention, the polyoxytetramethylene glycol preferably has a number-average molecular weight of 500 to 5000, more preferably a number-average molecular weight of 500 to 3500 for the purpose of achieving high ink storage stability and high abrasion resistance of printed images.

Examples of the polycarbonate polyol that can be used for producing the hydrophilic-group-containing polyurethane (B) include a polycarbonate polyol obtained through a reaction between a carbonate and a polyol and a polycarbonate polyol obtained through a reaction between phosgene and bisphenol A or the like.

Examples of the carbonate include methyl carbonate, dimethyl carbonate, ethyl carbonate, diethyl carbonate, cyclocarbonate, and diphenyl carbonate.

Examples of the polyol that can react with a carbonate include dihydroxy compounds having a relatively low molecular weight such as ethylene glycol, diethylene glycol, triethylene glycol, 1,2-propylene glycol, 1,3-propylene glycol, dipropylene glycol, 1,4-butanediol, 1,3-butanediol, 1,2-butanediol, 2,3-butanediol, 1,5-pentanediol, 1,5-hexanediol, 2,5-hexanediol, 1,6-hexanediol, 1,7-heptanediol, 1,8-octanediol, 1,9-nonanediol, 1,10-decanediol, 1,11-undecanediol, 1,12-dodecanediol, 3-methyl-1,5-pentanediol, 2-ethyl-1,3-hexanediol, 2-methyl-1,3-propanediol, 2-methyl-1,8-octanediol, 2-buryl-2-ethylpropanoldiol, 2-methyl-1,8-octanediol, neopentyl glycol, 1,4-cyclohexanediol, 1,4-cyclohexanedimethanol, hydroquinone, resorcin, bisphenol-A, bisphenol-F, and 4,4'-biphenol; polyether polyols such as polyethylene glycol, polypropylene glycol, and polyoxytetramethylene glycol; and polyester polyols such as polyhexamethylene adipate, polyhexamethylene succinate, and polycaprolactone.

Examples of the polyester polyol include a polyester polyol obtained through an esterification reaction between a polyol having a low molecular weight and a polycarboxylic acid, a polyester obtained through a ring-opening polymerization reaction of a cyclic ester compound such as ε-caprolactone, and a copolymerization polyester of the foregoing.

Examples of the polyol having a low molecular weight include ethylene glycol and propylene glycol.

Examples of the polycarboxylic acid include succinic acid, adipic acid, sebacic acid, dodecane dicarboxylic acid, terephthalic acid, isophthalic acid, phthalic acid, anhydrides of the foregoing, and ester-forming derivatives of the foregoing.

As for the other polyol, for example, an alicyclic-moiety-containing polyol such as cyclohexanediol, an aromatic-cyclic-moiety-containing polyol, or the like may be used in combination with the above-described various polyols.

The other polyol is preferably used in the range of 50 to 95 mass% with respect to the entirety of the polyol (b1) usable for producing the hydrophilic-group-containing polyurethane (a1), preferably in the range of 80 to 95 mass% for the purpose of achieving high water dispersion stability and high abrasion resistance. In particular, the polyether polyol such as the polyoxytetramethylene glycol and the polycarbonate polyol are preferably used in the range of 50 to 95 mass% with respect to the entirety of the polyol (b1) usable for producing the hydrophilic-group-containing polyurethane (a1), preferably in the range of 80 to 95 mass% for the purpose of achieving high water dispersion stability and high abrasion resistance.

Examples of the polyisocyanate (b2) that is used for producing the hydrophilic-group-containing polyurethane (B) include aromatic diisocyanates such as phenylene diisocyanate, tolylene diisocyanate, diphenylmethane diisocyanate, and naphthalene diisocyanate; and aliphatic or alicyclic moiety-containing diisocyanates such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, and 2,2,4-trimethylhexamethylene diisocyanate. These examples may be used alone or in combination of two or more thereof. In particular, use of such an aliphatic or alicyclic moiety-containing diisocyanate is preferred because ink discharge stability can be enhanced.

The hydrophilic-group-containing polyurethane (B) may optionally have a functional group that can react with a part of the polysiloxane (A), such as a hydrolyzable silyl group, a silanol group, an amino group, an imino group, or a hydroxy group, as long as advantages of the present invention are not degraded. However, as described above, it is preferred that the polysiloxane (A) and the hydrophilic-group-containing polyurethane (B) be substantially not bonded to each other in view of maintaining high storage stability of a binder for an inkjet printing ink according to the present invention and high ink dischargeability. Accordingly, it is also preferred that the hydrophilic-group-containing polyurethane (B) do not have functional groups that can react with the polysiloxane (A).

Next, a method for producing a binder for an inkjet printing ink according to the present invention will be described. A binder for an inkjet printing ink according to the present invention can be produced by, for example, a step (I) of producing the hydrophilic-group-containing polyurethane (B); a step (II) of producing a polysiloxane intermediate (for example, the condensate (A-2)) that is a hydrolytic condensate of the silane compound and is usable for forming the polysiloxane (A); a step (III) of mixing the thus-obtained polysiloxane intermediate, the hydrophilic-group-containing polyurethane (B), and, for example, a silane compound represented by the polysiloxane (A-1) or the like to allow the polysiloxane intermediate to react with the silane compound; and a step (IV) of making a mixture of the reaction product obtained in the step (III) and the hydrophilic-group-conoaining polyurethane (B) be aqueous; as a result, a binder for an inkjet printing ink can be produced in which composite resin particles containing the polysiloxane (A) within resin particles formed of the hydrophilic-group-containing polyurethane (B) are stably dispersed in the aqueous medium (C).

The polysiloxane (A) is a substance having relatively low stability. Accordingly, as described above, the polysiloxane (A) is preferably produced by two-step reactions constituted by the step (II) of producing a polysiloxane intermediate and the step (III) of allowing the intermediate to react with a silane compound for the purpose of enhancing the production efficiency of a binder for an inkjet printing ink according to the present invention. Specifically, the polysiloxane (A) is preferably formed by the two-step reactions constituted by the step (II) of producing the condensate (A-2) and the step (III) of subsequently allowing the condensate (A-2) to react with the polysiloxane (A-1).

The step (I) can be performed by, for example, mixing the polyol (b1) containing the hydrophilic-group-containing polyol and the like and the polyisocyanate (b2) and allowing the polyol (b1) to react with the polyisocyanate (b2) at about 70°C to 200°C under stirring.

The hydrophilic-group-containing polyurethane (B) may be optionally made to have a higher molecular weight by being subjected to a chain extension reaction. This chain extension reaction is preferably performed after the polysiloxane (A) and the hydrophilic-group-containing polyurethane (B) are dispersed in an aqueous medium in the step (IV) described below.

The step (II) is a step of producing a polysiloxane intermediate such as the condensate (A-2) usable for forming the polysiloxane (A). The step (II) can be performed by gradually or collectively supplying the silane compound to a reaction vessel and subsequently allowing the compound to react under stirring in the range of 20°C to 120°C for about 0.5 to 24 hours.

The step (III) can be performed by mixing the hydrophilic-group-containing polyurethane (B) obtained in the step (I), the polysiloxane intermediate obtained in the step (II), and the silane compound, and stirring the mixture at about 70°C to 200°C to allow the polysiloxane intermediate to react with the silane compound.

In the step (III), the mixing of the hydrophilic-group-containing polyurethane (B), the polysiloxane intermediate obtained in the step (II), and the silane compound is preferably performed in the absence of emulsifying agents. By performing the mixing in the absence of emulsifying agents and subsequently rapidly performing the step (IV), a binder for an inkjet printing ink can be obtained in which composite resin particles containing the hydrophobic polysiloxane (A) within resin particles formed of the hydrophilic-group-containing polyurethane (B) are stably dispersed in the aqueous medium (C).

The step (IV) is a step of dispersing the mixture of the polysiloxane (A) and the hydrophilic-group-containing polyurethane (B) obtained through the steps (I) to (III), in the aqueous medium (C). Specifically, the hydrophilic groups of the hydrophilic-group-containing polyurethane (B) in the mixture are optionally neutralized and the mixture is then mixed with the aqueous medium (C). As a result, a binder for an inkjet printing ink can be obtained in which resin particles containing the hydrophobic polysiloxane (A) within resin particles formed of the hydrophilic-group-containing polyurethane (B) are stably dispersed in the aqueous medium (C).

The neutralization of the hydrophilic groups is not necessarily performed; however, in view of enhancing water dispersion stability, the neutralization is preferably performed. In particular, when the hydrophilic groups are anionic groups such as carboxylic groups or sulfonic groups, the entirety of or a part of the hydrophilic groups are preferably neutralized with the basic compound to be turned into carboxylate groups or sulfonate groups for the purpose of further enhancing water dispersion stability.

If necessary, the mixing of the mixture of the polysiloxane (A) and the hydrophilic-group-containing polyurethane (B) with the aqueous medium (C) may be performed by emulsification such as forced emulsification, phase-inversion emulsification, D-phase emulsification, or gel emulsification. Specifically, stirring using a single device such as a stirring blade, a Disper, or a homogenizer, or composite stirring using such devices in combination may be performed; a sand mill, a multiscrew extruder, or the like may be used.

Alternatively, a binder for an inkjet printing ink according to the present invention may be produced by a method other than the above-described production method. For example, the binder can be produced by a step (V) of producing the hydrophilic-group-containing polyurethane; a step (VI) of producing the polysiloxane (A) by subjecting the silane compound to a hydrolysis condensation reaction; a step (VII) of mixing the thus-obtained polysiloxane (A) and the hydrophilic-group-containing polyurethane; a step (VIII) of making the mixture be aqueous; and a step (IX) of producing the hydrophilic-group-containing polyurethane (B) with the chain extender. The steps (V) to (VIII) can be performed under the same reaction conditions as in the steps (I) to (IV).

Next, the aqueous medium (C) used in the present invention will be described.
The aqueous medium (C) is used as a solvent for the polysiloxane (A) and the hydrophilic-group-containing polyurethane (B). Examples of the aqueous medium (C) include water, organic solvents miscible with water, and mixtures of the foregoing. Examples of organic solvents miscible with water include alcohols such as methanol, ethanol, and n- and iso-propanol; ketones such as acetone and methyl ethyl ketone; polyalkylene glycols such as ethylene glycol, diethylene glycol, and propylene glycol; and alkyl ethers of polyalkylene glycols; lactams such as N-methyl-2-pyrrolidone. In the present invention, water alone may be used; a mixture of water and an organic solvent miscible with water may be used; or an organic solvent alone that is miscible with water may be used. In view of safety and environmental load, water alone or a mixture of water and an organic solvent miscible with water is preferred and water alone is particularly preferred. The content of the aqueous medium (C) with respect to the entire amount of the binder for an inkjet printing ink is preferably 50 to 90 mass%, more preferably 60 to 85 mass%.

A binder for an inkjet printing ink according to the present invention may further optionally contain a curing agent or a curing catalyst as long as storage stability and ink dischargeability are not degraded.

Examples of the curing agent include a compound having a silanol group and/or a hydrolyzable silyl group, a polyepoxy compound, a polyoxazoline compound, and polyisocyanate. Examples of the curing catalyst include lithium hydroxide, sodium hydroxide, and potassium hydroxide.

Next, an inkjet printing ink according to the present invention will be described.
An inkjet printing ink according to the present invention contains the binder for an inkjet printing ink, a pigment or a dye, and optionally various additives.

Examples of the pigment include publicly known and commonly used inorganic pigments and organic pigments. Examples of the inorganic pigments include titanium oxide, antimony red, colcothar, cadmium red, cadmium yellow, cobalt blue, Prussian blue, ultramarine blue, carbon black, and graphite.

Examples of the organic pigments include quinacridone pigments, quinacridonequinone pigments, dioxazine pigments, phthalocyanine pigments, anthrapyrimidine pigments, anthanthrone pigments, indanthrone pigments, flavanthrone pigments, perylene pigments, diketopyrrolopyrrole pigments, perinone pigments, quinophthalone pigments, anthraquinone pigments, thioindigo pigments, benzimidazolone pigments, and azo pigments.

These pigments may be used in combination of two or more thereof. Such a pigment may be surface-treated so as to have self dispersibility in aqueous media.

Examples of the dye include azo dyes such as monoazo dyes and disazo dyes, metal complex salt dyes, naphthol dyes, anthraquinone dyes, indigo dyes, carbonium dyes, quinoimine dyes, cyanine dyes, quinoline dyes, nitro dyes, nitroso dyes, benzoquinone dyes, naphthoquinone dyes, naphthalimide dyes, perinone dyes, phthalocyanine dyes, and triarylmethane dyes.

Examples of the additives include a polymer dispersing agent, a viscosity modifier, a wetting agent, a defoaming agent, a surfactant, a preservative, a pH adjusting agent, a chelating agent, a plasticizer, an ultraviolet absorbing agent, an antioxidant, and an acrylic resin, which has been used for binders of existing inkjet printing inks.

Examples of the polymer dispersing agent include acrylic resins and styrene-acrylic resins. Such resins may be random resins, block resins, or graft resins. When the polymer dispersing agent is used, acid or base may also be used to neutralize the polymer dispersing agent.

Examples of a method for producing the inkjet printing ink are as follows.

(1) Methods in which the pigments or the dyes, the aqueous media, the binders for inkjet printing inks, and optionally the additives are collectively mixed with various dispersing apparatuses to produce inks.

(2) Methods in which the pigments or the dyes, the aqueous media, and optionally the additives are mixed with various dispersing apparatuses to prepare ink precursors composed of aqueous dispersions of the pigments or the dyes; and the ink precursors composed of aqueous dispersions of the pigments or the dyes, the binders for inkjet printing inks, optionally aqueous media and additives are then mixed with various dispersing apparatuses to produce inks.

Examples of methods for preparing the pigment-containing ink precursors used in the methods for producing inks described in (2) above are as follows.

(i) Methods in which kneaded substances obtained by preliminarily kneading pigments and additives such as polymer dispersing agents with twin rolls, mixers, and the like and aqueous media are mixed with various dispersing apparatuses to prepare ink precursors composed of pigment-containing aqueous dispersions.

(ii) Methods in which pigments and polymer dispersing agents are mixed with various dispersing apparatuses; the solubility of the polymer dispersing agents is subsequently controlled so that the polymer dispersing agents are deposited on the surface of the pigments; and the pigments are further mixed with dispersing apparatuses to prepare ink precursors composed of pigment-containing aqueous dispersions.

(iii) Methods in which pigments and the additives are mixed with various dispersing apparatuses; and the mixtures and resin emulsions are subsequently mixed with dispersing apparatuses to prepare ink precursors composed of pigment-containing aqueous dispersions.

Examples of dispersing apparatuses that can be used in the production of the inkjet printing ink include an ultrasonic homogenizer, a high-pressure homogenizer, a paint shaker, a ball mill, a roll mill, a sand mill, a sand grinder, a DYNO--MILL, a Dispermat, a SC mill, and a Nanomizer. These apparatuses can be used alone or in combination of two or more thereof.

An inkjet printing ink obtained by such a method may contain coarse particles having a diameter of about 250 nm or more. There are cases where such coarse particles cause, for example, clogging of printer nozzles, resulting in degradation of ink dischargeability. Accordingly, after the preparation of an aqueous dispersion of a pigment or the preparation of an ink, coarse particles are preferably removed by centrifugal separation, filtration, or the like.

The inkjet printing ink obtained above preferably has a volume-average particle diameter of 200 nm or less; in particular, in the case of the formation of photographic-quality images having higher glossiness, the volume-average particle diameter is more preferably in the range of 80 to 120 nm.

The inkjet printing ink preferably contains the polysiloxane (A) and the hydrophilic-group-containing polyurehane (B) in the total content of 0.2 to 10 mass%, an aqueous medium in a content of 50 to 95 mass%, and a pigment in a content of 0.5 to 15 mass% with respect to the entirety of the inkjet printing ink.

An inkjet printing ink according to the present invention obtained by such a method can be mainly used for inkjet printing using an inkjet printer: for example, inkjet printing for base materials such as paper sheets, plastic films, metal films, and metal sheets. An inkjet mode is not particularly limited and may be a publicly known mode such as a continuous discharging mode (charge control mode, spraying mode, or the like) or an on-demand mode (piezo mode, thermal mode, electrostatic suction mode, or the like).

Printed products printed with an ink for inkjet printing according to the present invention have high abrasion resistance and hence are less likely to suffer from, for example, deterioration of printed images due to loss of pigments and the like and have images with high color optical density. Accordingly, the ink is applicable to various applications including printed products obtained by photographic printing by inkjet printing and high-speed printing by inkjet printing.

## EXAMPLES

Hereinafter, the present invention will be specifically described with reference to Examples and Comparative examples.

[Synthetic example 1] Preparation of organic solvent solution (a1-1) of hydrophilic-group-containing polyurethane

A reaction vessel equipped with a stirrer, a thermometer, a dropping funnel, a condenser, and a nitrogen gas inlet was charged with 376 parts by mass of a polyoxytetramethylene glycol having a number-average molecular weight of 2,000 (PTMS-2000, manufactured by Mitsubishi Chemical Corporation) and 93 parts by mass of isophorone diisocyanate (IPDI). The mixture was heated to 100°C and allowed to react at this temperature for an hour.

The temperature of the reaction solution was then decreased to 80°C; 31 parts by mass of dimethylol propionic acid (DMPA) and 269 parts by mass of methyl ethyl ketone (MEK) were added to the reaction vessel; and the mixture was then allowed to react at 80°C for 5 hours. Subsequently, 231 parts by mass of isopropyl alcohol (IPA) was added to the reaction vessel to achieve dilution. Thus, an organic solvent solution (a1-1) of a hydrophilic-group-containing polyurethane having a weight-average molecular weight of 38,000 (non-volatile content: 50 mass%) was obtained.

[Synthetic example 2] Preparation of organic solvent solution (a1-2) of hydrophilic-group-containing polyurethane

A reaction vessel equipped with a stirrer, a thermometer, a dropping funnel, a condenser, and a nitrogen gas inlet was charged with 376 parts by mass of a polycarbonate polyol having a 1,6-hexanediol skeleton and a number-average molecular weight of 2,000 (UH-200, manufactured by Ube Industries, Ltd.) and 93 parts by mass of isophorone diisocyanate. The mixture was heated to 100°C and allowed to react at this temperature for an hour.

The temperature of the reaction solution was then decreased to 80°C; 31 parts by mass of dimethylol propionic acid (DMPA) and 269 parts by mass of methyl ethyl ketone (MEK) were added to the reaction vessel; and the mixture was then allowed to react at 80°C for 5 hours.

Subsequently, 231 parts by mass of isopropyl alcohol (IPA) was added to the reaction vessel to achieve dilution. Thus, an organic solvent solution (a1-2) of a hydrophilic-group-containing polyurethane having a carboxyl group and a weight-average molecular weight of 36,000 (non-volatile content: 50 mass%) was obtained.

[Synthetic example 3] Preparation of organic solvent solution (a1-3 of hydrophilic-group-containing polyurethane

A reaction vessel equipped with a stirrer, a thermometer, a dropping funnel, a condenser, and a nitrogen gas inlet was charged with 354 parts by mass of a polyoxytetramethylene glycol having a number-average molecular weight of 2,000 (PTMG-2000, manufactured by Mitsubishi Chemical Corporation) and 102 parts by mass of isophorone diisocyanate. The mixture was heated to 100°C and allowed to react at this temperature for an hour.

The temperature of the reaction solution was then decreased to 8C°C; 29 parts by mass of dimethylol propionic acid (DMPA) and 261 parts by mass of methyl ethyl ketone (MEK) were added to the reaction vessel; and the mixture was then allowed to react at 80°C for 5 hours.

The temperature of the reaction solution was then decreased to 50°C; 15 parts by mass of 3-aminopropyltriethoxysilane (APTES) and 239 parts by mass of isopropyl alcohol (IPA) were added to the reaction vessel to cause a reaction. Thus, an organic solvent solution (a1-3) of a hydrophilic-group-containing polyurethane having a carboxyl group and a hydrolyzable silyl group and a weight-average molecular weight of 20,000 (non-volatile content: 50 mass%) was obtained.

[Table 1]

| Table 1 | | Synthetic example 1 | Synthetic example 2 | Synthetic example 3 |
|---|---|---|---|---|
| Abbreviation of solvent solution of hydrophilic-group-containing polyurethane | | a1-1 | a1-2 | a1-3 |
| Composition of hydrophilic-group-containing polyurethane (parts by mass) | PTMG-2000 | 376 | - | 354 |
| | UH-200<br>DMPA | -<br>31 | 376<br>31 | -<br>29 |
| | IPDI | 93 | 93 | 102 |
| | APTES | - | - | 15 |
| Non-volatile content (mass%) | | 50 | 50 | 50 |

"PTMG-2000": polyoxytetramethylene glycol having a number-average molecular weight of 2,000 (PTMG-2000, manufactured by Mitsubishi Chemical Corporation)
"UH-200": polycarbonate polyol having a 1,6-hexanediol skeleton
"DMPA": dimethylol propionic acid
"IPDI": isophorone diisocyanate

"APTES": 3-aminopropyltriethoxysilane

[Synthetic example 4] Preparation of polysiloxane (a2-1) (condensate of methyltrimethoxysilane)

A reaction vessel equipped with a stirrer, a thermometer, a dropping funnel, a condenser, and a nitrogen gas inlet was charged with 1421 parts by mass of methyltrimethoxysilane (MTMS). The solution was heated to 60°C.
A mixture of 0.17 parts by mass of "A-3" [iso-propyl acid phosphate, manufactured by Sakai Chemical Industry Co., Led.] and 207 parts by mass of deionized water was then dropped into the reaction vessel over 5 minutes. The mixture was subsequently stirred at 80°C for 4 hours to undergo a hydrolysis condensation reaction.
A condensate obtained by the hydrolysis condensation reaction was distilled at a temperature of 40°C to 60°C under a reduced pressure or 300 to 10 mmHg (Evaporation of methanol was initiated at a reduced pressure of 300 mmHg and the pressure was ultimately reduced to 10 mmHg. Hereafter, the same condition was used.) to remove methanol and water generated during the above-described reaction. Thus, 1,000 parts by mass of a polysiloxane (a2-1) constituted by a mixture containing a methyltrimethoxysilane condensate having a number-average molecular weight of 1,000 (active content: 70 mass%) was obtained.
The active content is calculated from a value obtained by dividing a theoretical yield (parts by mass) in the case where all the methoxy groups of a silane monomer such as methyltrimethoxysilane (MTMS) undergo a condensation reaction by an actual yield (parts by mass) after the condensation reaction [theoretical yield (parts by mass) in the case where all the methoxy groups of silane monomer undergo condensation reaction/actual yield (parts by mass) after the condensation reaction].

[Synthetic example 5] Preparation of polysiloxane (a2-2) (condensate of ethyltrimethoxysilane)

A reaction vessel equipped with a stirrer, a thermometer, a dropping funnel, a condenser, and a nitrogen gas inlet was charged with 1296 parts by mass of ethyltrimethoxysilane (ETMS). The solution was heated to 60°C.
A mixture of 0.14 parts by mass of "A-3" [iso-propyl acid phosphate, manufactured by Sakai Chemical Industry Co., Ltd.] and 171 parts by mass of deionized water was then dropped into the reaction vessel over 5 minutes. The mixture was subsequently stirred at 80°C for 4 hours to undergo a hydrolysis condensation reaction.
A condensate obtained by the hydrolysis condensation reaction was distilled at a temperature of 40°C to 60°C under a reduced pressure of 300 to 10 mmHg to remove generated methanol and water. Thus, 1,000 parts by mass of a polysiloxane (a2-2) constituted by a mixture containing a ethyltrimethoxysilane condensate having a number-average molecular weight of 1,100 (active content: 70 mass%) was obtained.
[Table 2]

| Table 2 | | Synthetic example 4 | Synthetic example 5 |
|---|---|---|---|
| Abbreviation | | a2-1 | a2-2 |
| Silane monomer (parts by mass) | MTMS | 1421 | - |
| | ETMS | - | 1296 |
| Active content (mass%) | | 70.0 | 70.0 |

The abbreviations in Table 2 are as follows.

"MTMS": methyltrimethoxysilane
"ETMS": ethyltrimethoxysilane

Example 1 [example of preparing binder (i) for inkjet printing ink]

A reaction vessel equipped with a stirrer, a thermometer, a dropping funnel, a condenser, and a nitrogen gas inlet was charged with 441 parts by mass of the organic solvent solution (a1-1) of the hydrophilic-group-containing polyurethane obtained in Synthetic example 1, 49 parts by mass of isopropyl alcohol (IPA), 11 parts by mass of phenyltrimethoxysilane (PTMS), and 6.6 parts by mass of dimethyldimethoxysilane (DMDMS). The mixture was heated to 80°C.
A mixture of 0.1 parts by mass of "A-3" [iso-propyl acid phosphate, manufactured by Sakai Chemical Industry Co., Ltd.] and 5.0 parts by mass of deionized water was then dropped over 5 minutes. The mixture was stirred at the

same temperature for an hour to undergo a hydrolysis condensation reaction.

The reaction solution was then mixed with 19 parts by mass of the methyltrimethoxysilane condensate (a2-1), subsequently mixed with 4.6 parts by mass of deionized water, and stirred at the same temperature for 16 hours to undergo a hydrolysis condensation reaction. Thus, an organic solvent solution (C-1) composed of a mixture of the organic solvent solution (a1-1) of the hydrophilic-group-containing polyurethane and polysiloxane was obtained.

The organic solvent solution (C-1) and 11 parts by mass of a 48 mass% aqueous solution of potassium hydroxide were then mixed to provide a neutralized substance in which carboxyl groups in the hydrophilic-group-containing polyurethane were neutralized. A mixture of the neutralized substance and 1,120 parts by mass of deionized water was then distilled under a reduced pressure of 300 to 10 mmHg at 40°C to 60°C for 5 hours to remove generated methanol, organic solvents, and water. Thus, 1,000 parts by mass of a binder (i) for an inkjet printing ink (non-volatile content: 25.0 mass%) in which a composite resin containing polysiloxane within resin particles formed of the hydrophilic-group-containing polyurethane was dispersed in the aqueous medium was obtained.

Example 2 [example of preparing binder (ii) for inkjet printing ink]

A reaction vessel equipped with a stirrer, a thermometer, a dropping funnel, a condenser, and a nitrogen gas inlet was charged with 441 parts by mass of the organic solvent solution (a1-1) of the hydrophilic-group-containing polyurethane obtained in Synthetic example 1, 49 parts by mass of isopropyl alcohol (IPA), 9.8 parts by mass of phenyltrimethoxysilane, and 6.0 parts by mass of dimethyldimethoxysilane. The mixture was heated to 80°C.

A mixture of 0.1 parts by mass of "A-3" [iso-propyl acid phosphate, manufactured by Sakai Chemical Industry Co., Ltd.] and 4.5 parts by mass of deionized water was then dropped over 5 minutes. The mixture was stirred at the same temperature for an hour to undergo a hydrolysis condensation reaction.

The reaction solution was then mixed with 21 parts by mass of the ethyltrimethoxysilane condensate (a2-2), subsequently mixed with 4.1 parts by mass of deionized water, and stirred at the same temperature for 16 hours to undergo a hydrolysis condensation reaction. Thus, an organic solvent solution (C-2) composed of a mixture of the organic solvent solution (a1-1) of the hydrophilic-group-containing polyurethane and polysiloxane was obtained.

The organic solvent solution (C-2) and 11 parts by mass of a 48 mass% aqueous solution of potassium hydroxide were then mixed to provide a neutralized substance in which carboxyl groups in the hydrophilic-group-containing polyurethane were neutralized. A mixture of the neutralized substance and 1,121 parts by mass of deionized water was then distilled under a reduced pressure of 300 to 10 mmHg at 40°C to 60°C for 5 hours to remove generated methanol, organic solvent, and water. Thus, 1,000 parts by mass of a binder (ii) for an inkjet printing ink (non-volatile content: 25.0 mass%) in which a composite resin containing polysiloxane within resin particles formed of the hydrophilic-group-containing polyurethane was dispersed in the aqueous medium was obtained.

Example 3 [example of preparing binder (iii) for inkjet printing ink]

A reaction vessel equipped with a stirrer, a thermometer, a dropping funnel, a condenser, and a nitrogen gas inlet was charged with 441 parts by mass of the organic solvent solution (a1-2) of the hydrophilic-group-containing polyurethane obtained in Synthetic example 2, 49 parts by mass of isopropyl alcohol (IPA), 11 parts by mass of phenyltrimethoxysilane, and 6.6 parts by mass of dimethyldimethoxysilane. The mixture was heated to 80°C.

A mixture of 0.1 parts by mass of "A-3" [iso-propyl acid phosphate, manufactured by Sakai Chemical Industry Co., Ltd..] and 5.0 parts by mass of deionized water was then dropped over 5 minutes. The mixture was stirred at the same temperature for an hour to undergo a hydrolysis condensation reaction.

The reaction solution was then mixed with 19 parts by mass of the methyltrimethoxysilane condensate (a2-1), subsequently mixed with 4.6 parts by mass of deionized water, and stirred at the same temperature for 16 hours to undergo a hydrolysis condensation reaction. Thus, an organic solvent solution (C-3) composed of a mixture of the organic solvent solution (a1-2) of the hydrophilic-group-containing polyurethane and polysiloxane was obtained.

The organic solvent solution (C-3) and 11 parts by mass of a 48 mass% aqueous solution of potassium hydroxide were then mixed to provide a neutralized substance in which carboxyl groups in the hydrophilic-group-containing polyurethane were neutralized. A mixture of the neutralized substance and 1,120 parts by mass of deionized water was then distilled under a reduced pressure of 300 to 10 mmHg at 40°C to 60°C for 5 hours to remove generated methanol, organic solvent, and water. Thus, 1,000 parts by mass of a binder (iii) for an inkjet printing ink (non-volatile content: 25.0 mass%) in which a composite resin containing polysiloxane within resin particles formed of the nydrophilic-group-containing polyurethane was dispersed in the aqueous medium was obtained.

Example 4 [example of preparing binder (iv) for inkjet printing ink]

A reaction vessel equipped with a stirrer, a thermometer, a dropping funnel, a condenser, and a nitrogen gas

inlet was charged with 392 parts by mass of the organic solvent solution (a1-1) of the hydrophilic-group-containing polyurethane obtained in Synthetic example 1, 44 parts by mass of isoporopyl alcohol (IPA), 22 parts by mass of phenyltrimethoxysilane, and 13 parts by mass of dimethyldimethoxysilane. The mixture was heated to 80°C.

A mixture of 0.2 parts by mass of "A-3" [iso-propyl acid phosphate, manufactured by Sakai Chemical Industry Co., Ltd.] and 9.9 parts by mass of deionized water was then dropped over 5 minutes. The mixture was stirred at the same temperature for an hour to undergo a hydrolysis condensation reaction.

The reaction solution was then mixed with 38 parts by mass of the methyltrimethoxysilane condensate (a2-1), subsequently mixed with 9.2 parts by mass of deionized water, and stirred at the same temperature for 16 hours to undergo a hydrolysis condensation reaction. Thus, an organic solvent solution (C-4) composed of a mixture of the organic solvent solution (a1-1) of hydrophilic-group-containing polyurethane and polysiloxane was obtained.

The organic solvent solution (C-4) and 9.5 parts by mass of a 48 mass% aqueous solution of potassium hydroxide were then mixed to provide a neutralized substance in which carboxyl groups in the hydrophilic-group-containing polyurethane were neutralized. A mixture of the neutralized substance and 1,129 parts by mass of deionized water was then distilled under a reduced pressure of 300 to 10 mmHg at 40°C to 60°C for 5 hours to remove generated methanol, organic solvent, and water. Thus, 1,000 parts by mass of a binder (iv) for an inkjet printing ink (non-volatile content: 25.0 mass%) in which a composite resin containing polysiloxane within resin particles formed of the hydrophilic-group-containing polyurethane was dispersed in the aqueous medium was obtained.

Example 5 [example of preparing binder (v) for inkjet printing ink]

A reaction vessel equipped with a stirrer, a thermometer, a dropping funnel, a condenser, and a nitrogen gas inlet was charged with 222 parts by mass of the organic solvent solution (a1-1) of the hydrophilic-group-containing polyurethane obtained in Synthetic example 1, 25 parts by mass of isopropyl alcohol (IPA), 61 parts by mass of phenyltrimethoxysilane, and 37 parts by mass of dimethyldimethoxysilane. The mixture was heated to 80°C.

A mixture of 0.7 parts by mass of "A-3" [iso-propyl acid phosphate, manufactured by Sakai Chemical Industry Co., Ltd.] and 28 parts by mass of deionized water was then dropped over 5 minutes. The mixture was stirred at the same temperature for an hour to undergo a hydrolysis condensation reaction.

The reaction solution was then mixed with 105 parts by mass of the methyltrimethoxysilane condensate (a2-1), subsequently mixed with 25 parts by mass of deionized water, and stirred at the same temperature for 16 hours to undergo a hydrolysis condensation reaction. Thus, an organic solvent solution (C-5) composed of a mixture of the organic solvent solution (a1-1) of the hydrophilic-group-containing polyurethane and polysiloxane was obtained.

The organic solvent solution (C-5) and 5.4 parts by mass of a 48 mass% aqueous solution of potassium hydroxide were then mixed to provide a neutralized substance in which carboxyl groups in the hydrophilic-group-containing polyurethane were neutralized. A mixture of the neutralized substance and 1, 158 parts by mass of deionized water was then distilled under a reduced pressure of 300 to 10 mmHg at 40°C to 60°C for 5 hours to remove generated methanol, organic solvent, and water. Thus, 1,000 parts by mass of a binder (v) for an inkjet printing ink (non-volatile content: 25.0 mass%) in which a composite resin containing polysiloxane within resin particles formed of the hydrophilic-group-containing polyurethane was dispersed in the aqueous medium was obtained.

Example 6 [example of preparing binder (vi) for inkjet printing ink]

A reaction vessel equipped with a stirrer, a thermometer, a dropping funnel, a condenser, and a nitrogen gas inlet was charged with 441 parts by mass of the organic solvent solution (a1-3) of the hydrophilic-group-containing polyurethane obtained in Synthetic example 3, 49 parts by mass of isopropyl alcohol (IPA), 11 parts by mass of phenyltrimethoxysilane, and 6.6 parts by mass of dimethyldimethoxysilane. The mixture was heated to 80°C.

A mixture of 0.1 parts by mass of "A-3" [iso-propyl acid phosphate, manufactured by Sakai Chemical Industry Co., Ltd.] and 5.0 parts by mass of deionized water was then dropped over 5 minutes. The mixture was stirred at the same temperature for an hour to undergo a hydrolysis condensation reaction. Thus, an organic solvent solution of a composite resin intermediate in which hydrolyzable silyl groups of the hydrophilic-group-containing polyurethane in the (a1-3) were bonded to polysiloxane derived from the PTMS and the DMDMS was obtained.

The composite resin intermediate was then mixed with 19 parts by mass of the methyltrimethoxysilane condensate (a2-1), subsequently mixed with 4.6 parts by mass of deionized water, and stirred at the same temperature for 16 hours to undergo a hydrolysis condensation reaction. Thus, an organic solvent solution (C-6) of a composite resin in which the methyltrimethoxysilane condensate (a2-1) was further bonded to the composite resin intermediate was obtained.

The organic solvent solution (C-6) of the composite resin and 10 parts by mass of a 48 mass aqueous solution of potassium hydroxide were then mixed to provide a neutralized substance in which carboxyl groups in the composite resin were neutralized. A mixture of the neutralized substance and 1,120 parts by mass of deionized water was then

distilled under a reduced pressure of 300 to 10 mmHg at 40°C to 60°C for 5 hours to remove generated methanol, organic solvent, and water. Thus, 1,000 parts by mass of a binder (vi) for an inkjet printing ink (non-volatile content: 25.0 mass%) in which the composite resin in which the hydrophilic-group-conLaining polyurethane and the polysiloxane were bonded was dispersed in the aqueous medium was obtained.

Example 7 [example of preparing binder (vii) for inkjet printing ink]

A reaction vessel equipped with a stirrer, a thermometer, a dropping funnel, a condenser, and a nitrogen gas inlet was charged with 198 parts by mass of the organic solvents solution (a1-1) of the hydrophilic-group-containing polyurethane obtained in Synthetic example 1, 22 parts by mass of isopropyl alcohol (IPA), 66 parts by mass of phenyltrimethoxysilane, and 40 parts by mass of dimethyldimethoxysilane. The mixture was heated to 80°C.

A mixture of 0.7 parts by mass of "A-3" [iso-propyl acid phosphate, manufactured by Sakai Chemical Industry Co., Ltd.] and 30 parts by mass of deionized water was then dropped over 5 minutes. The mixture was stirred at the same temperature for an hour to undergo a hydrolysis condensation reaction.

The reaction solution was then mixed with 115 parts by mass of the methyltrimethoxysilane condensate (a2-1), subsequently mixed with 28 parts by mass of deionized water, and stirred at the same temperature for 16 hours to undergo a hydrolysis condensation reaction. Thus, an organic solvent solution (C-7) composed of a mixture of the organic solvent solution (a1-1) of the hydrophilic-group-containing polyurethane and polysiloxane was obtained.

The organic solvent solution (C-7) and 4.8 parts by mass of a 48 mass% aqueous solution of potassium hydroxide were then mixed to provide a neutralized substance in which carboxyl groups in the hydrophilic-group-containing polyurethane were neutralized. A mixture of the neutralized substance and 1,163 parts by mass of deionized water was then distilled under a reduced pressure of 300 to 10 mmHg at 40°C to 60°C for 5 hours to remove generated methanol, organic solvent, and water. Thus, 1,000 parts by mass of a binder (vii) for an inkjet printing ink (non-volatile content: 25.0 mass%) in which a composite resin containing polysiloxane within resin particles formed of the hydrophilic-group-containing polyurethane was dispersed in the aqueous medium was obtained.

[Table 3]

| Table 3 | | Examples | | | | | | |
|---|---|---|---|---|---|---|---|---|
| | | 1 | 2 | 3 | 4 | 5 | 6 | 7 |
| Abbreviation of binder for inkjet printing ink | | i | ii | iii | iv | v | vi | vii |
| Silane compound (parts by mass) | PTMS | 11 | 9.8 | 11 | 22 | 61 | 11 | 66 |
| | DMDMS | 6.6 | 6.0 | 6.6 | 13 | 37 | 6.6 | 40 |
| | a2-1 | 19 | - | 19 | 38 | 105 | 19 | 115 |
| | a2-2 | - | 21 | - | - | - | - | - |
| Organic solvent solution of hydrophilic-group-containing polyurethane (parts by mass) | a1-1<br>a1-2 | 441<br>- | 441<br>- | -<br>441 | 392<br>- | 222<br>- | -<br>- | 198<br>- |
| | a1-3 | - | - | - | - | - | 441 | - |
| 48 mass% aqueous solution of potassium hydroxide (parts by mass) | | 11 | 11 | 11 | 9.5 | 5.4 | 10 | 4.8 |
| [Polysiloxane structure/polyurethane resin] (mass ratio) | | 10/90 | 10/90 | 10/90 | 20/80 | 55/45 | 10/90 | 40/60 |
| Non-volatile content (mass%) | | 25.0 | 25.0 | 25.0 | 25.0 | 25.0 | 25.0 | 25.0 |

Third footnote

"PTMS": phenyltrimethoxysilane
"DMDMS": dimethyldimethoxysilane

Comparative example 1 [example of preparing binder (viii) for inkjet printing ink]

A reaction vessel equipped with a stirrer, a thermometer, a dropping funnel, a condenser, and a nitrogen gas

inlet was charged with 489 parts by mass of the organic solvent solution (a1-1) of the hydrophilic-group-containing polyurethane obtained in Synthetic example 1 and 54 parts by mass of isopropyl alcohol (IPA). The mixture was heated to 50°C.

The organic solvent solution and 12 parts by mass of a 48 mass% aqueous solution of potassium hydroxide were then mixed to provide a neutralized substance in which carboxyl groups in the hydrophilic-group-containing polyurethane were neutralized. A mixture of the neutralized substance and 1,112 parts by mass of deionized water was then distilled under a reduced pressure of 300 to 10 mmHg at 40°C to 60°C for 5 hours to remove generated methanol, organic solvent, and water. Thus, 1,000 parts by mass of a binder (viii) for an inkjet printing ink (non-volatile content: 25.0 mass%) was obtained.

Comparative example 2 [example of preparing binder (ix) for inkjet printing ink]

A reaction vessel equipped with a stirrer, a thermometer, a condenser, and a nitrogen gas inlet was charged with 20 parts by mass of the polysiloxane (a2-1) obtained in Synthetic example 4, 0.3 parts by mass of an emulsifying agent ("Newcol 707-SF", trademark, manufactured by Nippon Nyukazai Co., Ltd.), and 61 parts by mass of deionized water to provide an aqueous dispersion of the polysiloxane (non-volatile content: 25.0 mass%).
Subsequently, 81 parts by mass of the dispersion was mixed with 731 parts by mass of the hydrophilic-group-containing polyurethane (binder for inkjet printing ink, ncn-volatile content: 25.0 mass%) (viii) obtained in Comparative example 1 to provide 812 parts by mass of a binder (ix) for an inkjet printing ink (non-volatile content: 25.0 mass%) in which the hydrophilic-group-containing polyurethane and the polysiloxane were independently dispersed in the aqueous medium.

Preparation example 1 (aqueous dispersion of quinacridone-based pigment)

A planetary mixer PLM-V-50V having a volume of 50 L (manufactured by INOUE MFG., INC.) was charged with 1,500 g of a vinyl polymer (styrene/acrylic acid/methacrylic acid = 77/10/13 (mass ratio); weight-average molecular weight: 11,000; acid value: 156 mgKOH/g); 4,630 g of a quinacridone-based pigment (Chromophthal Jet Magenta DMQ, manufactured by Ciba Specialty Chemicals), 380 g of phthalimide-methylated 3,10-dichloroquinacridone (the average number of phthalinlide-methyl group per molecule was 1.4); 2,600 g of diethylene glycol; and 688 g of a 34 mass% aqueous solution of potassium hydroxide. The mixture was kneaded for 4 hours.

Ion-exchanged water heated to 60°C in a total amount of 8,000 g was added over 2 hours to the kneaded substance to provide a colored resin composition having a non-volatile content of 37.9 mass%.

While 744 g of diethylene glycol and 7,380 g of ion-exchanged water were added in small amounts to 12 kg of the colored resin composition obtained in the above-described manner, the colored resin composition was stirred with a dispersion stirrer. Thus, a precursor of an aqueous pigment dispersion (aqueous pigment dispersion to be subjected to dispersion treatment) was obtained.

Subsequently, 18 kg of the precursor of an aqueous pigment dispersion was treated with a bead mill (NANO MILL NM-G2L, manufactured by ASADA IRON WORKS. CO., LTD.; bead diameter: 0.3 mm zirconia beads; bead packing fraction: 85%; cooling water temperature: 10°C; number of revolutions: 2,660 rpm). The solution from the bead mill was subjected to centrifugal separation at 13,000 G for 10 minutes and subsequently filtered through a filter having an effective opening size of 0.5 μm to provide an aqueous pigment dispersion of the quinacridone-based pigment. The concentration of the quinacridone-based pigment in the aqueous pigment dispersion was 14.9 mass%.

Preparation of inkjet printing ink

The binder (i) for an inkjet printing ink obtained in Example 1, the quinacridone-based pigment obtained in Preparation example 1, 2-pyrrolidinone, triethylene glycol monobutyl ether, glycerin, a surfactant (Surfynol 440, manufactured by Air Products and Chemicals, Inc.), and ion-exchanged water were mixed and stirred in accordance with a mixing formula below such that the concentration of the quinacridone-based pigment was 4 mass% and the concentration of the composite resin constituted by the polysiloxane (A) and the hydrophilic-group-containing polyurethane (B) was 1 mass%. Thus, an inkjet printing ink (I) was prepared. Inkjet printing inks (II) to (IX) were obtained in the same manner as that described above except that, instead of the binder (i) for an inkjet printing ink, the binders (ii) to (ix) for inkjet printing inks obtained in Examples 2 to 7 and Comparative examples 1 and 2 were respectively used.

(Mixing formula of inkjet printing ink)

·Aqueous dispersion of quinacridone-based pigment obtained in Preparation example 1 (pigment concentration:

14.9%); 26.8 g
·2-pyrrclidinone; 8.0 g
·Triethylene glycol monobutyl ether; 8.0 g
·Glycerin; 3.0 g
·Surfactant (Surfynol 440, manufactured by Air Products and Chemicals, Inc.); 0.5 g
·Ion-exchanged water; 48.7 g
·Binders for inkjet printing inks obtained in Examples 1 to 7 and Comparative examples 1 and 2 (non-volatile content: 25 mass%); 4.0 g

[Method for evaluating storage stability of inkjet printing ink]

The viscosity of the inkjet printing inks obtained above and the particle diameter of dispersed particles in the inks were measured. The viscosity was measured with a VISCO MFTER TV-22 manufactured by TOKI SANGYO CO., LTD. The particle diameter was measured with a Microtrac UPA EX150 manufactured by NIKKISO CO., LTD.
The inks were contained in sealed glass containers such as screw tubes and left in a thermostatic oven at 70°C (heating test) for 4 weeks. The viscosity of the resultant inks and the particle diameter of dispersed particles in the inks were measured in the same manner as that described above.
Variations in the viscosity and the particle diameter of such an ink after the heating test with respect to the viscosity and the particle diameter before the heating test were calculated with the following formulae and the storage stability of the ink was evaluated.
(Formula I)

[(particle diameter of dispersed particles in ink after heating test)/(particle diameter of dispersed particles in ink before heating test)] × 100

evaluation system]

Good: percentage of variation in particle diameter is less than 5%
Fair: percentage of variation in particle diameter is 5% or more and less than 10%
Poor: percentage of variation in particle diameter is 10% or more

(Formula II)

[(viscosity of ink after heating test)/(viscosity of ink before heating test)] × 100

[Evaluation system]

Good: percentage of variation in viscosity is less than 2%
Fair: percentage of variation in viscosity is 2% or more and less than 5%
Poor: percentage of variation in viscosity is 5% or more

[Method for evaluating ink dischargeability]

A diagnostic page was printed with a Photosmart D5360 (manufactured by Hewlett-Packard Company) in which a black ink cartridge was filled with such an inkjet printing ink and the state of the nozzles was checked. After 500 pages of a solid image of 18 cm x 25 cm per page were continuously printed with a printing density of 100%, the diagnostic page was printed and the state of the nozzles was checked again. A change in the state of the nozzles before and after the continuous solid-image printing was evaluated as ink discharge stability. The evaluation system is as follows.

[Evaluation system]

Excellent: no change in the state of nozzles and no abnormal discharging
Good: slight adhesion of ink to nozzles but no abnormality in ink discharging direction
Fair: after continuous printing of 500 pages of the solid image, occurrence of abnormality in ink discharging direction or non-discharging of ink
Poor: incompletion of continuous printing of 500 pages due to occurrence of abnormality in ink discharging direction or non-discharging of ink during the printing

[Method for evaluating printing properties of inkjet printing inks]

(Glossiness)

A solid image was printed with a printing density of 100% on the printing surface of a photographic paper sheet (gloss) [HP advance photo paper sheet, manufactured by Hewlett-Packard Company], which is an inkjet printing paper sheet, with a commercially available thermal-jet-mode inkjet printer (Photosmart D5360, manufactured by Hewlett-Packard Company) in which a black ink cartridge was filled with such an ink.

After the printed product was left at room temperature for 24 hours, the glossiness of arbitrary three points in the printed region was measured with a Micro-haze plus (manufactured by Toyo Seiki Seisaku-sho, Ltd.) in terms of 20° glossiness. The average value of the glossiness was calculated.

(Method for evaluating abrasion resistance)

A solid image was printed with a printing density of 100% on the printing surface of a photographic printing paper sheet (gloss) [HP advance photo paper sheet, manufactured by Hewlect-Packard Company] with a commercially available thermal-jet-mode inkjet printer (Photosmart D5360, manufactured by Hewlett-Packard Company) in which a black ink cartridge was filled with such an ink.

After the printed product was dried at room temperature for 10 minutes, the printed surface was scratched with a fingernail and the degree of scraping in terms of color and the like in the printed surface was visually inspected. The evaluation system is as follows.

[Evaluation system]

A: no scratches in the printed surface and no observation of, for example, separation of printing materials such as the pigment
B: some scratches in the printed surface but no observation of, for example, separation of the colorant such as the pigment
C: serious scratches in the printed surface and observation of separation of the colorant such as the pigment

[Table 4]

| Table 4 | Examples | | | | | | |
|---|---|---|---|---|---|---|---|
| | 1 | 2 | 3 | 4 | 5 | 6 | 7 |
| Inkjet printing ink | I | II | III | IV | V | VI | VII |
| Storage stability | | | | | | | |
| Variation in particle diameter | Good | Good | Good | Fair | Fair | Fair | Fair |
| Variation in viscosity | Good | Good | Good | Good | Good | Fair | Good |
| Ink dischargeability | Excellent | Excellent | Excellent | Excellent | Good | Good | Good |
| Printing properties | | | | | | | |
| Glossiness | 73 | 75 | 74 | 70 | 52 | 60 | 54 |
| Abrasion resistance | A | A | A | A | A | A | A |

[Table 5]

| Table 5 | Comparative examples | |
|---|---|---|
| | 1 | 2 |
| Inkjet printing ink | VIII | IX |
| Storage stability | | |
| Variation in particle diameter | Good | Fair |
| Variation in viscosity | Good | Fair |
| Ink dischargeability | Good | Fair |
| Printing properties | | |
| Glossiness | 70 | 50 |
| Abrasion resistance | C | C |

**Claims**

1. A binder for an inkjet printing ink, comprising a polysiloxane (A), a hydrophilic-group-containing polyurethane (B), and an aqueous medium (C), wherein the polysiloxane (A) and the hydrophilic-group-containing polyurethane (B) form composite resin particles and the polysiloxane (A) is dispersed in the aqueous medium (C) with the hydrophilic-group-containing polyurethane (B).

2. The binder for an inkjet printing ink according to Claim 1, wherein the polysiloxane (A) and the hydrophilic-group-containing polyurethane (B) are not chemically bonded to each other.

3. The binder for an inkjet printing ink according to Claim 1, wherein the composite resin particles in which the polysiloxane (A) forms a core layer and the hydrophilic-group-containing polyurethane (B) forms a shell layer are dispersed in the aqueous medium (C).

4. The binder for an inkjet printing ink according to Claim 1, wherein a mass ratio [(A)/(B)] of the polysiloxane (A) to the hydrophilic-group-containing polyurethane (B) is in a range of 1/99 to 30/70.

5. The binder for an inkjet printing ink according to Claim 1, wherein the polysiloxane (A) has one or more selected from the group consisting of an aromatic cyclic moiety bonded to a silicon atom, an alkyl group that is bonded to a silicon atom and has 1 to 3 carbon atoms, and an alkoxy group that is bonded to a silicon atom and has 1 to 3 carbon atoms.

**6.** The binder for an inkjet printing ink according to Claim 1, wherein the polysiloxane (A) is a reaction product between a polysiloxane (A-1) having one or more structures selected from the group consisting of general formulae (I) and (II) below and a condensate (A-2) of an alkyltrialkoxysilane in which an alkyl group has 1 to 3 carbon atoms,

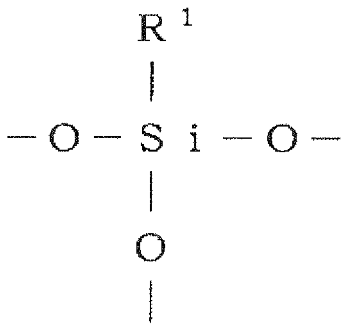

(I)

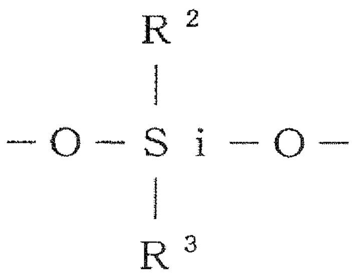

(II)

[in the general formulae (I) and (II), $R^1$ represents an organic group that is bonded to the silicon atom and has 4 to 12 carbon atoms; and $R^2$ and $R^3$ each independently represent a methyl group bonded to the silicon atom or an ethyl group bonded to the silicon atom.].

**7.** The binder for an inkjet printing ink according to Claim 1, wherein the hydrophilic-group-containing polyurethane (B) is obtained by allowing a polyol (b1) including one or more selected from the group consisting of a polyether polyol and a polycarbonate polyol and a hydrophilic-group-containing polyol to react with a polyisocyanate (b2) and has a weight-average molecular weight of 15,000 to 50,000.

**8.** The binder for an inkjet printing ink according to Claim 7, wherein the polyol (b1) includes a polyoxytetramethylene glycol having a weight-average molecular weight of 500 to 5,000 and dimethylol propionic acid.

**9.** An ink for inkjet printing, comprising the binder for an inkjet printing ink according to any one of Claims 1 to 8 and a pigment.

**10.** A printed product printed with the ink for inkjet printing according to Claim 9.

**INTERNATIONAL SEARCH REPORT**

International application No.
PCT/JP2010/058712

A. CLASSIFICATION OF SUBJECT MATTER
*C09D11/00*(2006.01)i, *B41J2/01*(2006.01)i, *B41M5/00*(2006.01)i

According to International Patent Classification (IPC) or to both national classification and IPC

B. FIELDS SEARCHED

Minimum documentation searched (classification system followed by classification symbols)
C09D11/00, B41J2/01, B41M5/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-19198 A (Ricoh Co., Ltd.), 29 January 2009 (29.01.2009), paragraphs [0181] to [0185]; examples 8 to 10 & EP 2052044 A1 & WO 2008/153203 A1 & CN 101541895 A | 1-10 |
| A | JP 60-235859 A (Bayer AG.), 22 November 1985 (22.11.1985), claims; page 5, lower left column, line 9 to page 7, upper right column, line 8 & US 4598120 A1 & EP 163085 A1 & DE 3415920 A & DE 3563450 D & DE 3415920 A1 & AT 35277 E & HU 38982 A & AT 35277 T | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>08 June, 2010 (08.06.10) | Date of mailing of the international search report<br>15 June, 2010 (15.06.10) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2010/058712

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-513209 A (Videojet Systems International, Inc.),<br>15 December 1998 (15.12.1998),<br>claims; page 15, line 18 to page 16, line 7<br>& US 5652286 A1 & EP 807148 A1<br>& WO 1996/023844 A1 & DE 69603256 T<br>& DE 69603256 C & AU 4395696 A<br>& ES 2133926 T & CA 2211113 A<br>& MX 9705875 A | 1-10 |
| A | JP 2008-150507 A (Toda Kogyo Corp.),<br>03 July 2008 (03.07.2008),<br>claims 1 to 4; paragraphs [0066], [0111] to [0130]<br>(Family: none) | 1-10 |
| A | JP 2000-72991 A (Seiko Epson Corp.),<br>07 March 2000 (07.03.2000),<br>claims 1 to 4; paragraphs [0023] to [0026], [0075] to [0084]<br>(Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000001639 A